# EUROPÄISCHE PATENTSCHRIFT

(11) **EP 0 462 411 B1**
(45) Veröffentlichungstag und Bekanntmachung des Hinweises auf die Patenterteilung: **07.09.1994**
(21) Anmeldenummer: 91108311.1
(22) Anmeldetag: 23.05.1991
(51) Int. Cl.: F16F 15/26, F02B 75/06

(54) **Momentenausgleich zweiter Ordnung an Fünfzylinder-Reihen-Brennkraftmaschinen**
Balancing of the second order couple of a 5 cylinder in-line combustion engine
Equilibrage du couple de deuxième ordre d'un moteur à combustion interne 5 cylindres en ligne

(30) Priorität: 16.06.1990 DE 4019304
(43) Veröffentlichungstag der Anmeldung: 27.12.1991
(73) Patentinhaber: MAN Nutzfahrzeuge Aktiengesellschaft, 80976 München (DE)
(72) Erfinder: Deschler, Gerhard, Dipl.-Ing., W-8500 Nürnberg (DE); Gebhardt, Hans, W-8506 Langenzenn (DE)

(56) Entgegenhaltungen:
- DE-B- 1 142 727
- FR-A- 1 399 082
- FR-A- 1 519 587
- FR-A- 2 278 922
- US-A- 4 300 493
- PATENT ABSTRACTS OF JAPAN vol. 3, no. 97 (M-69) 17 August 1979,& JP-A-54 71210 (NISSAN) 06 Juli 1979,

## Beschreibung

Die Erfindung bezieht sich auf einen Momentenausgleich zweiter Ordnung entsprechend dem Gattungsbegriff des Patentanspruches 1.

Aus "Umdruck zur Vorlesung Maschinendynamik", Prof. Dr. Ing. Hussmann kann man die Lehre zum Ausgleich freier Massenmomente erster, zweiter und höherer Ordnung entnehmen. Demnach verschwinden bei Motoren mit gerader Zylinderzahl und gleichmäßiger Zündfolge die freien Massenmomente. Dagegen wird bei Motoren mit ungerader Zylinderzahl und gleichmäßiger Zündfolge ein Momentenausgleich erforderlich. Dies kann dadurch geschehen, daß zum Ausgleich der freien Massenmomente zweiter Ordnung zwei parallel zur Kurbelwelle liegende Ausgleichswellen vorgesehen werden, welche gegenläufig mit der doppelten Kurbelwellendrehzahl umlaufen. Die Ausgleichswellen sind an ihren freien Enden mit Ausgleichsmassen versehen, die um 180° zueinander versetzt sind. Um die Phasenlage der gegenläufig rotierenden Ausgleichswellen bezüglich der Kurbelwelle einzuhalten, muß zwingend ein drehmomentschlüssiger Antrieb der beiden Ausgleichswellen durch die Kurbelwelle vorgesehen werden. In Richtung eines Kurbelsterns der Kurbelwelle gesehen sind die in Ausgangslage parallel zueinander liegenden Ausgleichsmassen einer Seite um einen Winkel 180° + φ gegenüber einer ersten Kröpfung der Kurbelwelle zu versetzen.

Unter der ersten Kröpfung ist dabei die Kröpfung zu verstehen, die an dem, einem Schwungrad abgewandten Ende der Kurbelwelle liegt. Zu der Lage der Ausgleichswellen wird ausgesagt, daß diese parallel zur Kurbelwelle angeordnet sein müssen. In US-PS 36 67 317 wird vorgeschlagen, zum Ausgleich der Massenkräfte zweiter Ordnung gegenläufige Ausgleichsmassen vorzusehen, welche von einer Kurbelwange ausgehend durch Zahnräder angetrieben werden. Der Antrieb der Ausgleichsmassen wird bei dem dargestellten Vierzylindermotor von einer der Symmetrieebene benachbarten Kurbelwange aus vorgenommen. Ein solcher Ausgleich kann nur Massenkräfte ausgleichen. Massenmomente um die Querachse sind auf die Weise nicht ausgleichbar.

Aus DE-OS 36 15 695 ist es bekannt, die beiden gegenläufig mit doppelter Kurbelwellendrehzahl umlaufenden Ausgleichswellen in einer Ölwanne zu lagern. Die Ausgleichswellen liegen dabei parallel zur Kurbelwelle und werden von dieser zur Einhaltung von Drehzahl und Phasenlage gegenüber der Kurbelwelle ausgehend von einer Hurbelwange mittels eines Zahnkranzes und damit kämmenden Zahnrädern angetrieben. Der Zahnkranz treibt zunächst über ein Zahnrad eine erste Ausgleichswelle und von dort aus über ein Zahnrad die zweite Ausgleichswelle. Das Übersetzungsverhältnis von Zahnkranz zu den Zahnrädern der Ausgleichswellen beträgt 1 : 2. Da es sich um einen Vierzylindermotor handelt treten wie bekannt keine Massenmomente, sondern nur Massenkräfte auf. Um hier die Massenkräfte zweiter Ordnung vollständig zu eliminieren wurden die Ausgleichsmassen nur auf einer Seite der Ausgleichswelle in einer Symmetrieebene liegend angeordnet. Ein Nachteil einer solchen Einrichtung muß darin gesehen werden, daß die Lagerung in der Ölwanne bezüglich dem möglichst genau einzuhaltenden Achsabstandes von Ritzel und Zahnrad große Probleme bereitet. In der Regel erfolgt die Abdichtung zwischen einem Kurbelgehäuse und einem Ölwannenflansch mittels elastischer Dichtungen, die aber unvermeidbar zu sich verändernden Achsabständen führen.

Eine Lagerung dieser Art stellt eine Notlösung dar, wenn die Lagerung der Ausgleichswellen mit den Ausgleichsmassen in anderen Elementen des Motors nicht möglich ist.

Die Fünfzylinder-Reihen-Brennkraftmaschine hat wegen nicht längssymmetrischer Kurbelanordnung freie Massenmomente erster und zweiter Ordnung. Diese nach außen wirksamen und mit dem Quadrat der Drehzahl ansteigenden Belastungen müssen von der Motoraufhängung aufgenommen werden. Störende Auswirkungen auf die Umgebung werden im allgemeinen durch Zwischenschaltung elastischer Elemente zwischen Brennkraftmaschine und Fundament vermieden. Durch entsprechende Abstimmung wird erreicht, daß die Anregungen weitgehend von den Trägheitsmassen des Motors abgefangen werden. Dieser als Isolierung bezeichnete Effekt - nämlich Abminderung der Erregerkräfte in das Fundament - tritt erst bei überkritischer Abstimmung bei nₑᵣᵣ/nₑ>√2 ein und ist umso wirksamer je weiter die Betriebsfrequenz nₑᵣᵣ von der Eigenfrequenz nₑ des schwingungsfähigen Systems entfernt ist, d. h. je größer der Abstand zwischen Betriebspunkt und Resonanzstelle ist.

Was die Fundamentbelastung angeht, lassen sich also mit elastischer Lagerung und gegebenenfalls angepaßter Dämpfung die Eigenheiten des Fünf-Zylindermotors beherrschen. Da die Erregerkräfte jedoch in diesem Falle überwiegend von Motorblock und angebautem Getriebe und nur zu einem Bruchteil vom Fundament aufgenommen werden, treten dort hohe Belastungen auf, die zu Verformungen insbesondere an der Verbindungsstelle zwischen Motor und Getriebe, als der weichen Stelle des schwingungsfähigen Systems, führen. Da dieses System infolge seiner hohen Eigenfrequenz (im Vergleich zur elastischen Lagerung) unterkritisch betrieben wird, darf ein gewisser Sicherheitsabstand zur Resonanzstelle zur Vermeidung unzulässiger Belastungen nicht unterschritten werden. Wegen der beim Fünf-Zylindermotor vorhandenen Massenmomente zweiter Ordnung ist der Spielraum eng bemessen, und Leistungssteigerungen einhergehend mit schwereren Getrieben führen zu einer Senkung der Eigenfrequenz mit der Folge höherer Eigenformamplituden.

Diese bedingen größere Axialbewegungen im Längenausgleich der Kardanwelle, die bei hoher Drehmomentabgabe Axialkräfte von beträchtlichem Ausmaß hervorrufen und neben ungenehmen Axialschwingungen auch zu Schädigung des Getriebelagers führen können.

Aus JP-A-54 71 210 ist es bekannt, Massenmomente zweiter Ordnung dadurch auszugleichen, daß parallel zur Kurbelwelle einer Brennkraftmaschine zwei Ausgleichswellen vorgesehen sind, an deren Enden sich Ausgleichsmassen befinden. Der Antrieb der Ausgleichswellen erfolgt von der Kurbelwelle ausgehend mittels Zahnriemen, wobei die Ausgleichswellen mit der doppelten Drehzahl der Kurbelwelle laufen. Die ersten Ausgleichsmassen sind in Richtung auf einen Kurbelstern gesehen gleichgerichtet, jedoch gegenüber einer ersten Kurbelkröpfung um 180° versetzt. Die am anderen Ende der Kurbelwelle angeordneten zweiten Ausgleichsmassen sind in Richtung auf den Kurbelstern gesehen gegenüber den ersten Ausgleichsmassen um 180° versetzt. Ein derartiger Momentenausgleich beinhaltet den Nachteil, daß die durchgehenden Ausgleichswellen in schon vorhandenen Brennkraftmaschinen nicht unterzubringen sind, da sie entweder mit dem Kurbelgehäuse, der Ölwanne oder mit den Ausgleichsmassen erster Ordnung kollidieren. Ein Antrieb mittels Keilriemen ist nicht innerhalb eines Kurbelgehäuses möglich, da er dort mit Öl in Berührung kommt. Bei Versetzung der ersten Ausgleichsmassen gegenüber der ersten Kurbelkropfung um 180° verbleibt ein Moment um die Querachse der Brennkraftmaschine, der Momentenausgleich ist somit nicht perfekt.

Ausgehend von einem Momentenausgleich zweiter Ordnung gemäß dem Gattungsbegriff des Patentanspruches 1 liegt der Erfindung die Aufgabe zugrunde, die Anordnung der Ausgleichswellen so zu gestalten, daß diese auch bei vorgegebenen Brennkraftmaschinen im Kurbelgehäuse angeordnet werden können, ohne daß das Kurbelgehäuse wesentlich geändert werden muß.

Gelöst wird diese Aufgabe durch die dem Kennzeichen des Anspruches 1 zu entnehmenden Merkmale.

Durch den Antrieb der Ausgleichswellen von der dritten und achten Wange der Kurbelwelle und die Anordnung der Ausgleichsmassen in einer Ebene unterhalb der benachbarten Lagerstellen wird die Unterbringung der Ausgleichsmassen in einem Kurbelgehäuse einer bestehenden Fünf-Zylinder-Reihen-Brennkraftmaschine ohne wesentliche Änderung des Kurbelgehäuses ermöglicht, da sie nicht den, auf den übrigen Wangen der Kurbelwelle angeordneten Ausgleichsmassen erster Ordnung im Wege stehen. Die Ausgleichsmassen sind nicht wie sonst üblich auf einer gemeinsamen Ausgleichswelle angeordnet, sondern jede der Ausgleichswellen ist für sich unmittelbar mittels Lagergehäusen im Kurbelgehäuse unterhalb von Lagerstellen der Kurbelwelle gelagert, wobei die Lagergehäuse starr mit dem Kurbelgehäuse verbunden sind. Somit ist die Einhaltung des Achsabstandes von Kurbelwelle zur Drehachse der Ausgleichsmassen kein Problem. Eine durchgehende Ausgleichswelle würde den Kröpfungen und Ausgleichsmassen erster Ordnung der rotierenden Kurbelwelle im Wege stehen, so daß die unmittelbare Unterbringung im Kurbelgehäuse einer bestehenden Brennkraftmaschine ausgeschlossen wäre.

Eine vorteilhafte Weiterbildung des Momentenausgleichs nach Anspruch 1 kann dem Anspruch 2 entnommen werden.

Durch die richtige Wahl der Phasenlage zwischen Kurbelwelle und den Ausgleichsmassen läßt sich das Massenmoment zweiter Ordnung eliminieren.

Ein Ausführungsbeispiel der Erfindung ist schematisch in Zeichnungen dargestellt. Es zeigt:
- Figur 1: eine räumliche Ansicht der Zuordnung von einer Kurbelwelle zu den Ausgleichswellen mit damit drehfest verbundenen Ausgleichsmassen
- Figur 2: eine Seitenansicht der Kurbelwelle mit dem Antrieb der Ausgleichswellen und der damit verbundenen Ausgleichsmassen
- Figur 3: eine Ansicht der Kurbelwelle von der Unterseite mit den parallel dazu angeordneten Ausgleichswellen
- Figur 4: eine Stirnansicht eines Kurbelsterns mit fünf symmetrischen Kurbelkröpfungen und ersten Ausgleichsmassen
- Figur 5: eine Stirnansicht des Kurbelsterns wie nach Figur 4, jedoch mit Blick auf die zweiten Ausgleichsmassen
- Figur 6: eine Lagerung der Ausgleichswellen am Kurbelgehäuse in Vorderansicht
- Figur 7: ein Schnitt VII-VII aus Figur 6 mit Darstellung der Ausbildung der Ausgleichsmassen und deren Lagerung.

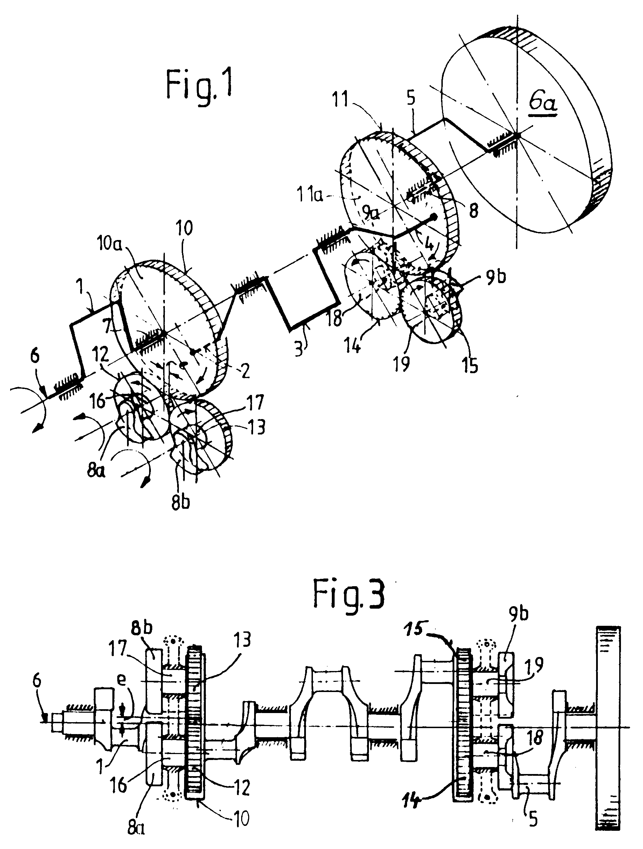

Eine schematische Darstellung einer Kurbelwelle einer Fünfzylinder-Reihen-Brennkraftmaschine mit gleichmäßiger -Zündfolge ist schematisch aus Figur 1 zu ersehen. Die Kurbelwelle 6 weist die gleichmäßig versetzten Kurbelkröpfungen 1 bis 5 auf. Die Zündfolge ergibt sich für diesen Kurbelstern zu 1-2-4-5-3. Die Zählung der Kröpfungen 1 bis 5 beginnt von einem, einem Schwungrad 6a abgewandten Ende der Kurbelwelle 6. Zum Ausgleich der Massenmomente zweiter Ordnung sind unter den Lagerstellen 7 und 8 zwischen den Kurbelkröpfungen 1 und 2, bzw. 4 und 5 erste und zweite Ausgleichsmassen 8a, 8b und 9a, 9b vorgesehen.

Der Antrieb dieser Ausgleichsmassen erfolgt durch erste und zweite Zahnkränze 10 und 11, welche mit einer dritten Wange 10a bzw. einer achten Wange 11a der Kurbelwelle 6 verbunden sind.

Erfindungsgemäß werden dabei die ersten Ausgleichsmassen 8a, 8b von dem ersten Zahnkranz 10 angetrieben, welcher auf der dritten Wange 10a angeordnet ist und die zweiten Ausgleichsmassen 9a, 9b werden von dem zweiten Zahnkranz 11 angetrieben, welcher auf der achten Wange 11a angeordnet ist. Diese Wangen tragen als einzige keine Ausgleichsmassen erster Ordnung. Die Ausgleichsmassen 8a, 8b und 9a, 9b wiederum werden von den Zahnkränzen 10, 11 über Zahnräder 12 bis 15, die in die Figuren 3 bis 5 näher dargestellt sind angetrieben. Die Ausgleichsmassen 8a, 8b sowie 9a, 9b werden über Ausgleichswellen 16 bis 19 fliegend in nicht dargestellten Lagergehäusen geführt, welche mit dem ebenfalls nicht dargestellten Kurbelgehäuse der Brennkraftmaschine verbunden sind.

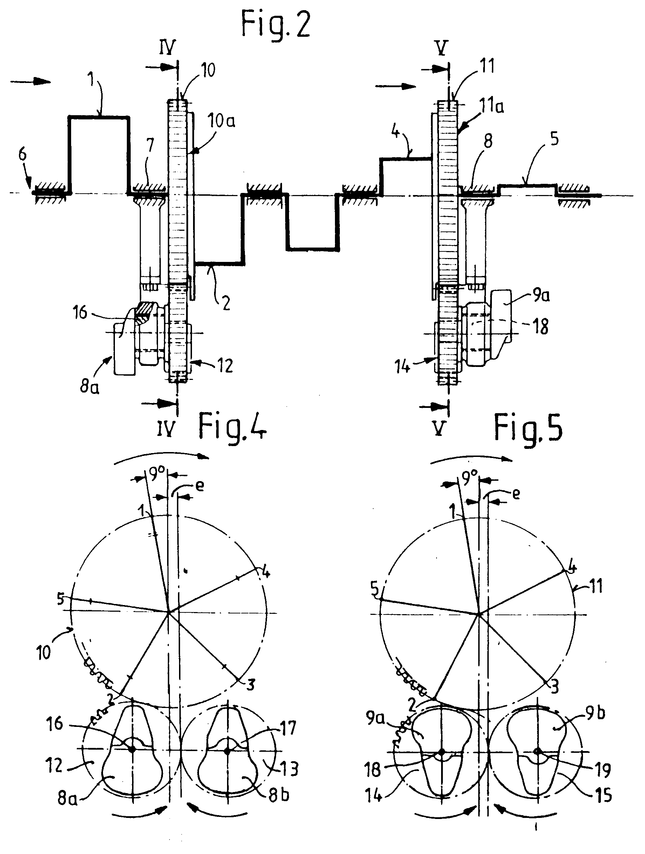

Eine Zuordnung der Ausgleichsmassen 8a, 8b und 9a, 9b zur Kurbelwelle 6 ist in Figur 2 in einer Seitenansicht erläutert. Der erste Zahnkranz 10 ist auf der dritten Wange 10a zwischen den Kurbelkröpfungen 1 und 2 angeordnet. Er treibt über das Zahnrad 12 und die Ausgleichswelle 16 die Ausgleichsmasse 8a an. Die Ausgleichsmasse 8a liegt dabei unter der Lagerstelle 7. Die in gleicher Ebene liegende Ausgleichsmasse 8b wird vom Zahnrad 12 über das damit kämmende Zahnrad 13 angetrieben, welches in der Figur 4 zu sehen ist.

Die zweiten Ausgleichsmassen 9a, 9b werden vom zweiten Zahnkranz 11 angetrieben, welcher auf der achten Wange 11a zwischen den Kurbelkröpfungen 4 und 5 angeordnet ist. Er treibt über das Zahnrad 14 und die Ausgleichswelle 18 die Ausgleichsmasse 9a an. Die Ausgleichsmasse 9a liegt in einer Ebene unter der Lagerstelle 8. Die in gleicher Ebene liegende Ausgleichsmasse 9b wird vom Zahnrad 14 über ein damit kämmendes Zahnrad 15 angetrieben, welches in der Figur 5 zu sehen ist.

Die Versetzung der Ausgleichsmassen 8a, 8b und 9a, 9b um 180° führt zu einem Moment um die Querachse der Kurbelwelle 6.

In Figur 3 ist eine Ansicht der Kurbelwelle 6 mit den Ausgleichswellen 16 bis 19 und den Ausgleichsmassen 8a, 8b und 9a, 9b von unten her gesehen dargestellt. Der auf der dritten Wange der Kurbelwelle 6 angeordnete erste Zahnkranz 10 treibt über die Zahnräder 12 und 13 die ersten Ausgleichsmassen 8a, 8b welche über Ausgleichswellen 16, 17 gelagert sind. Die Ausgleichswellen 16, 17 der ersten Ausgleichsmassen 8a, 8b sind erfindungsgemäß um den Betrag e gegenüber der Mittellinie der Kurbelwelle 6 versetzt. Die Ausgleichswellen 16 bis 19 können dabei nach links oder rechts versetzt sein, wichtig ist nur, daß die Ausgleichswellen sämtlich zur gleichen Seite versetzt sind.

Um den gleichen Betrag e und die gleiche Seite sind die Ausgleichswellen 18, 19 der zweiten Ausgleichsmassen 9a, 9b gegenüber der Mittellinie der Kurbelwelle 6 versetzt.

Durch diesen Versatz wird erfindungsgemäß ein aus den Massenkräften der Ausgleichsmassen 8a, 8b und 9a, 9b resultierendes Drehmoment um die Mittellinie der Kurbelwelle 6 vermieden, da die Massenkräfte die gleiche Größe aufweisen, das Drehmoment sich jedoch wegen des umgekehrten Vorzeichens der Kräfte und dem gleichen Versatz e aufhebt.

Eine Ansicht des Kurbelstern mit den ersten Ausgleichsmassen 8a, 8b in Richtung auf die erste Kurbelkröpfung 1 gesehen ist in Figur 4 dargestellt. Die erste Kurbelkröpfung 1 ist in der gezeigten Stellung des Kurbelsterns um den Betrag φ = 9° entgegen der Drehrichtung der Kurbelwelle der Brennkraftmaschine gegenüber der OT-Stellung dieser Kröpfung verdreht. Die übrigen Kurbelkröpfungen 2 bis 5 weisen wie schon eingangs erwähnt gleichen Versatz auf.

Die ersten Ausgleichsmassen 8a und 8b werden vom ersten Zahnkranz 10 über die Zahnräder 12 und 13 und die Ausgleichswellen 16 und 17 angetrieben. Dabei treibt der Zahnkranz 10 zunächst das Zahnrad 12 und dieses wiederum kämmt mit dem Zahnrad 13. Das Übersetzungsverhältnis von Zahnkranz 10 zu den Zahnrädern 12 und 13 wird 1 : 2 gewählt, so daß die Ausgleichsmassen 8a, 8b gegenläufig mit doppelter Drehzahl wie die Kurbelwelle umlaufen.

Die Ausgleichswellen 16 und 17 sind im dargestellten Beispiel um den Betrag e nach rechts verschoben und erzeugen in der gezeigten Stellung bezüglich der Mittellinie der Kurbelwelle ein rechts gerichtetes Drehmoment. Dieses Drehmoment wird aber durch ein Drehmoment der Ausgleichsmassen 9a, 9b kompensiert, wie aus Figur 5 hervorgeht.

In Figur 5 ist die Ansicht des Kurbelsterns mit den zweiten Ausgleichsmassen 9a, 9b ebenfalls in Richtung auf die erste Kurbelkröpfung 1 gesehen dargestellt. Die zweiten Ausgleichsmassen werden vom zweiten Zahnkranz 11 angetrieben, welcher auf der achten Wange sitzt (Figur 2). Der zweite Zahnkranz 11 kämmt zunächst mit dem Zahnrad 14 der Ausgleichswelle 18, welche mit der Ausgleichsmasse 9a drehfest verbunden ist. Das Zahnrad 14 wiederum treibt über das Zahnrad 15 die Ausgleichswelle 19 an, welche drehfest mit der zweiten Ausgleichsmasse 9b verbunden ist. Die Ausgleichswellen 18 und 19 sind ebenso wie die Ausgleichswellen 16 und 17 um einen Betrag e nach rechts verschoben. Wie bereits unter Figur 4 erwähnt wird durch diese Maßnahme ein Drehmoment um die Mittellinie der Kurbelwelle vermieden. Die in den Figuren 4 und 5 erwähnte Verschiebung um den Betrag e könnte natürlich auch nach links erfolgen, wesentlich ist nur, daß erste und zweite Ausgleichsmassen 8a, 8b und 9a, 9b um den gleichen Betrag e und in die gleiche Richtung verschoben sind.

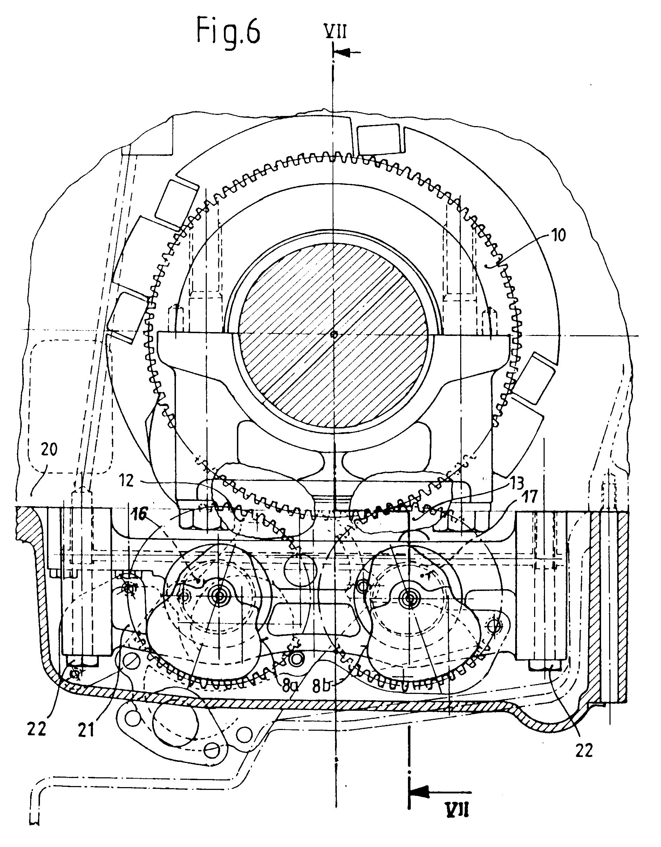

Eine konstruktive Lösung der Lagerung der Ausgleichswellen und ihre Befestigung am Kurbelgehäuse 20 ist in Figur 6 dargestellt. Als Beispiel für die Lagerung seien hier die Ausgleichsmassen 8a, 8b gewählt. Die beiden Ausgleichsmassen 8a, 8b sind im Lagergehäuse 21 geführt, welches mittels vier Schrauben 22 direkt am Kurbelgehäuse 20 befestigt wird. Der Antrieb der Ausgleichsmassen erfolgt wie schon ausgeführt durch den Zahnkranz 10, welcher nach den Figuren 1 und 2 auf der dritten Wange 10a angeordnet ist und welcher mit dem Zahnrad 12 kämmt. Dieses treibt über die Ausgleichswelle 16 eine Ausgleichsmasse 8a an, während durch das mit Zahnrad 12 kämmende Zahnrad 13 die parallel liegende Ausgleichswelle 17 mit zugehöriger Ausgleichsmasse 8b angetrieben wird.

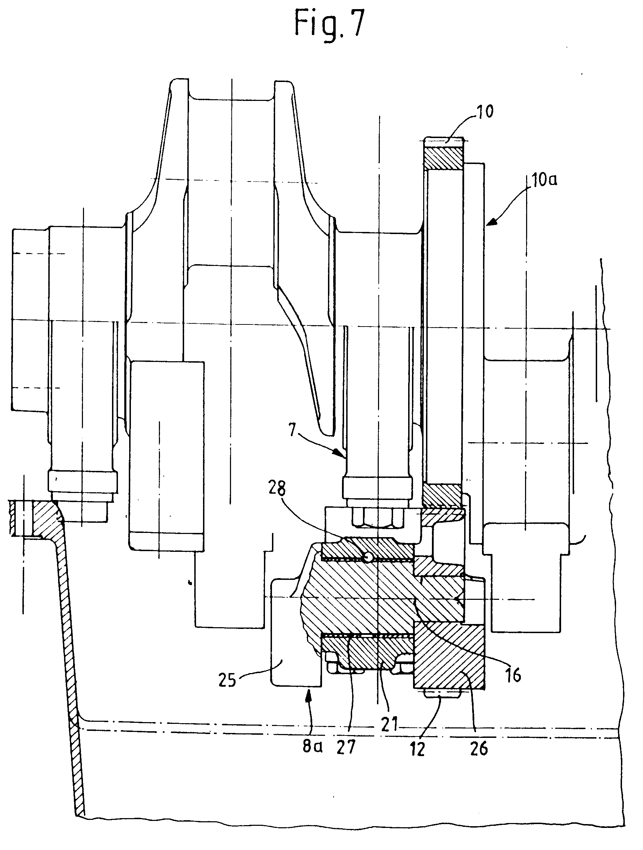

Figur 7 zeigt im Schnitt VII-VII von Figur 6 die Führung der Ausgleichsmasse 8a im Lagergehäuse 21 . Die Ausgleichsmasse 8a gliedert sich in eine Hälfte 25, welche eine Einheit mit der Ausgleichswelle 16 bildet und in eine andere Hälfte 26, welche eine Einheit mit dem Zahnrad 12 bildet. Die Hälfte 26 mit dem Zahnrad 12 wird auf die Ausgleichswelle 16 aufgesteckt und drehfest verbunden, beispielsweise durch eine Schrumpfverbindung. Den Antrieb des Zahnrades 12 übernimmt der Zahnkranz 10, der auf die dritte Wange 10a aufgeschoben und mit dieser drehfest verbunden ist. Die Massenverteilung der beiden Hälften 25 und 26 ist so zu bemessen, daß der resultierende Massenmittelpunkt soweit von der Symmetrieebene des Motors entfernt ist, daß die Massenkräfte eine Hälfte des Massenmoments zweiter Ordnung ausgleichen, während die Massenmomente der hier nicht dargestellten anderen Seite die andere Hälfte des Massenmoments zweiter Ordnung ausgleichen. Die Schmierung der in einer Lagerschale 26 geführten Ausgleichswelle 16 wird durch eine in den Schmierölkreislauf des Motors eingebundene Leitung 28 übernommen.

## Patentansprüche

1. Momentenausgleich zweiter Ordnung an Fünfzylinder-Reihen-Brennkraftmaschinen mit gleichmäßiger Zündfolge 1-2-4-5-3, bei denen im Bereich der Enden einer Kurbelwelle (6) gegenläufige erste und zweite Ausgleichsmassen (8a, 8b und 9a, 9b) vorgesehen sind, deren Ausgleichswellen (16, 17 und 18, 19) parallel zur Kurbelwelle (6) liegen und mit der Kurbelwelle (6) derart drehmomentschlüssig verbunden sind, daß die Ausgleichsmassen (8a, 8b und 9a, 9b) gegenläufig mit der doppelten Drehzahl der Kurbelwelle (6) rotieren, dadurch gekennzeichnet, daß die beiden ersten Ausgleichsmassen (8a, 8b) ausgehend von einer ersten Kurbelkröpfung (1) der Kurbelwelle (6) her in Richtung auf einen Kurbelstern der Kurbelwelle (6) gesehen gleich gerichtet, jedoch um einen Winkel 180° + φ in Drehrichtung der Brennkraftmaschine gegenüber der ersten Kurbelkröpfung verdreht sind, daß die beiden zweiten Ausgleichsmassen (9a, 9b) am anderen Ende der Kurbelwelle um 180° gegenüber den ersten Ausgleichsmassen (8a, 8b) versetzt sind, daß der Antrieb der ersten und zweiten Ausgleichsmassen (8a, 8b und 9a, 9b) ausgehend von einer dritten Wange (10a) und einer achten Wange (10b) der Kurbelwelle (6) erfolgt, wobei die Zählung der Wangen von der Kurbelkröpfung (1) her erfolgt, sowie die ersten und zweiten Ausgleichsmassen (8a, 8b und 9a, 9b) mittels Ausgleichswellen (16, 17 und 18, 19) fliegend in Lagergehäusen (21) gelagert sind, welche mit einem Kurbelgehäuse (20) verbunden sind und zur Herstellung des Drehmomentschlusses zwischen der Kurbelwelle (6) und den ersten Ausgleichsmassen (8a, 8b) die dritte Wange (10a) mit einem ersten Zahnkranz (10) versehen ist, welcher mit einem Zahnrad (12) und dieses wiederum mit einem Zahnrad (13) der Ausgleichswellen (16, 17) kämmt, sowie zur Herstellung des Drehmomentschlusses zwischen der Kurbelwelle (6) und den zweiten Ausgleichsmassen (9a, 9b) die achte Wange (11a) mit einem zweiten Zahnkranz (11) versehen ist, welcher mit einem Zahnrad (14) und dieses wiederum mit einem Zahnrad (15) der Ausgleichswellen (18, 19) kämmt, daß die ersten Ausgleichsmassen (8a, 8b) in einer Ebene unterhalb einer, der dritten Wange (10a) benachbarten ersten Lagerstelle (7) und die Ausgleichsmassen (9a, 9b) unterhalb einer der achten Wange (11a) benachbarten zweiten Lagerstelle (8) angeordnet sind, und daß die Ausgleichswellen (16 bis 19) um einen gleichen Betrag e und um gleiche Richtung seitlich bezüglich einer Mittellinie der Kurbelwelle (6) zum Zwecke der Kompensation von Drehmomenten um die Kurbelwelle (6) versetzt sind.

2. Momentenausgleich nach Anspruch 1, dadurch gekennzeichnet, daß der Winkel φ = 9° vor Zünd-OT beträgt.

3. Momentenausgleich nach den Ansprüchen 1 und 2, dadurch gekennzeichnet, daß die Lagergehäuse (21) für die Lagerung der Ausgleichswellen (16, 17 bzw. 18, 19) jeweils in einer Ebene unterhalb der Lagerstellen (7 bzw. 8) mittels Schrauben (22) seitlich an einem Kurbelgehäuse (20) befestigt sind, wobei jede der Ausgleichsmassen (8a bzw. 8b) zweiteilig ausgeführt ist, daß die Massenmittelpunkte derart zu liegen kommen, daß die Kräftepaare der Massenkräfte der Ausgleichsmassen (8a, 8b) einerseits und (9a, 9b) andererseits das Massenmoment zweiter Ordnung eliminieren, und daß dabei jeweils eine Hälfte (25) beispielsweise der Ausgleichsmassen (8a) mit der Ausgleichswelle (16) eine Einheit bildet, während die andere Hälfte (26) der Ausgleichsmasse eine Baueinheit mit einem Zahnrad (12) bildet und drehfest mit der Ausgleichswelle befestigt ist.

## Claims

1. Balancing of moments of the second order in five-cylinder in-line internal combustion engines with a uniform ignition sequence 1-2-4-5-3, in which first and second balancing masses (8a, 8b and 9a, 9b), working in opposite directions, are provided in the region of the ends of a crankshaft (6), the balancing shafts (16, 17 and 18, 19) of the said masses are positioned parallel to the crankshaft (6) and are connected in a torque-transmitting manner to the crankshaft (6) so that the balancing masses (8a, 8b and 9a, 9b) rotate in the opposite direction to and at twice the speed of the crankshaft (6), **characterized in that** the two first balancing masses (8a, 8b) have the same orientation starting from a first crank (1) of the shaft (6), seen in the direction of a radial arrangement on the crank shaft (6), yet are offset in relation to the first crank by an angle of 180° + φ in the direction of rotation of the internal combustion engine, and the two second balancing masses (9a, 9b) at the other end of the crankshaft are offset by 180° in relation to the first balancing masses (8a, 8b), and the drive of the first and second balancing masses (8a, 8b and 9a, 9b) takes place on the basis of a third web (10a) and an eighth web (10b) [*sic*] of the crankshaft (6), the numbering of the webs taking place from the crank (1) onwards, and also the first and second balancing masses (8a, 8b and 9a, 9b) are overhung via balancing shafts (16,17 and 18, 19) in bearing casings (21) connected to a crankcase (20), and the third web (10a) is provided with a first ring gear (10) to produce the torque connection between the crankshaft (6) and the first balancing masses (8a, 8b), the said ring gear meshing with a gearwheel (12), which in turn meshes with a gearwheel (13) of the balancing shafts (16, 17), and additionally, again to produce the torque connection between the crankshaft (6) and the second balancing masses (9a, 9b), the eighth web (11a) is provided with a second ring gear (11) which meshes with a gearwheel (14), which in turn meshes with a gearwheel (15) of the balancing shafts (18, 19), and the first balancing masses (8a, 8b) are arranged in a plane below a first bearing (7) adjacent to the third web (10a), and the balancing masses (9a, 9b) are arranged below a second bearing (8) adjacent to the eighth web (11a), and the balancing shafts (16 to 19) are offset by the same amount e and in the same direction laterally in relation to a central line of the crankshaft (6), for the purpose of compensating rotational moments about the crankshaft (6).

2. Balancing of moments in accordance with claim 1, **characterized in that** the angle φ = 9° before the ignition top dead centre.

3. Balancing of moments in accordance with claims 1 and 2, **characterized in that** the bearing casings (21) to bear the balancing shafts (16, 17 or 18, 19) are respectively secured by means of screws (22) laterally on a crankcase (20) in a plane below the bearings (7 or 8), each of the balancing masses (8a or 8b) being provided in two parts, and the centre points of the masses come into position so that on one hand the force couples eliminate the force due to inertia of the balancing masses (8a, 8b) and on the other hand eliminate the moment of inertia of the second order, and a respective half (25), for example, of the balancing body (8a) forms a unit with the balancing shaft (16), whilst the other half (26) of the balancing body forms a constructional unit with a gearwheel (12) and is secured in a rotationally rigid manner to the balancing shaft.

## Revendications

1. Compensation de couple de deuxième ordre sur des moteurs à combustion interne à cinq cylindres en ligne avec un ordre d'allumage régulier (1-2-4-5-3), dans lesquels sont prévus au niveau des extrémités d'un vilebrequin (6) des masses de compensation premières et secondes tournants en sens opposés (8a, 8b et 9a, 9b), dont les arbres de compensation (16, 17 et 18, 19) sont parallèles au vilebrequin (6) et sont liés avec ce vilebrequin (6) par une liaison de couple de rotation, telle que les masses de compensation (8a, 8b et 9a, 9b) tournent en sens opposé avec une vitesse de rotation double de celle du vilebrequin (6), caractérisée en ce que les deux premières masses de compensation (8a, 8b), en partant d'un premier maneton de manivelle (1) du vilebrequin (6) et en regardant en direction d'un croisillon du vilebrequin (6) ont la même direction, toutefois ont subi un pivotement de 180° + φ dans le sens de rotation du moteur à combustion interne par rapport au premier maneton de vilebrequin, en ce que les deux secondes masses de compensation (9a, 9b) à l'autre extrémité du vilebrequin sont décalées de 180° par rapport aux premières masses de compensation (8a, 8b), en ce que le mouvement des premières et deuxièmes masses de compensation 8a, 8b et 9a, 9b) est créé à partir d'un troisième flasque (10a) et d'un huitième flasque (10b) du vilebrequin (6), le décompte des flasques se faisant à partir du maneton (1) et les premières et secondes masses de compensation (8a, 8b et 9a, 9b) sont montées au moyen d'arbres de compensation (16, 17 et 18, 19) en porte-à-faux dans des logements de paliers (21) qui sont reliés à un carter-moteur (20) et pour créer la liaison de couple de rotation entre le vilebrequin (6) et les premières masses de compensation (8a, 8b) le troisième flasque est muni d'une première couronne dentée (10), qui engrène avec une roue dentée (12) et celle-ci à son tour engrène avec une roue dentée (13) des arbres de compensation (16, 17), et pour la réalisation du couple de rotation entre le vilebrequin (6) et les secondes masses de compensation (9a, 9b) le huitième flasque (11a) est muni d'une deuxième couronne dentée (11), qui engrène avec une roue dentée (14) et celle-ci à son tour avec une roue dentée (15) des arbres de compensation (18, 19), en ce que les premières masses de compensation (8a, 8b) sont disposées dans un plan en-dessous d'un premier point d'appui (7) voisin du troisième flasque (10a) et les masses de compensation (9a, 9b) sont placées en-dessous d'un deuxième point d'appui (8) voisin du huitième flasque (11a), et en ce que les arbres de compensation (16 à 19) sont décalés d'une même quantité e latéralement et dans la même direction par rapport à une ligne moyenne du vilebrequin (6) dans le but de compenser des couples de rotation autour du vilebrequin (6).

2. Compensation de couple selon la revendication 1, caractérisée en ce que l'angle φ = 9° avant allumage - OT.

3. Compensation de couple selon les revendications 1 et 2, caractérisée en ce que les logements de palier (21) pour le logement des arbres de compensation (16, 17 ou 18, 19) sont fixés respectivement latéralement dans un plan en-dessous des points d'appui (7 ou 8) au moyen de vis (22) sur un carter moteur (20), chacune des masses de compensation (8a ou 8b) étant réalisée en deux parties, en ce que les centres de masse viennent à se situer de manière que les couples de force des forces dues aux masses de compensation (8a, 8b) d'une part et (9a, 9b) d'autre part éliminent le moment d'inertie de deuxième ordre et en ce qu'en outre respectivement une moitié (25) par exemple des masses de compensation (8a) forme avec l'arbre de compensation (16) une unité, tandis que l'autre moitié (26) de la masse de compensation forme une unité avec une roue dentée (12) et est fixée solidaire en rotation avec l'arbre de compensation.
